# EUROPÄISCHE PATENTSCHRIFT

(11) **EP 4 339 398 B1**
(45) Veröffentlichungstag und Bekanntmachung des Hinweises auf die Patenterteilung: **02.07.2025**
(21) Anmeldenummer: 23196937.9
(22) Anmeldetag: 12.09.2023
(51) Int. Cl.: E04H 12/16, E04H 12/12, E04H 12/08, F03D 13/20

(54) **ÜBERGANGSSEGMENT EINES WINDKRAFT-TURMBAUWERKS**
TRANSITION SEGMENT OF A WIND TURBINE TOWER STRUCTURE
SEGMENT DE TRANSITION D'UNE TOUR D'ÉOLIENNE

(30) Priorität: 13.09.2022 DE 202022105166 U
(43) Veröffentlichungstag der Anmeldung: 20.03.2024
(73) Patentinhaber: Peter Herbers GmbH, 49716 Meppen (DE)
(72) Erfinder: Herbers, Peter, 49808 Lingen (DE)
(74) Vertreter: Patentanwälte Olbricht Buchhold Keulertz

(56) Entgegenhaltungen:
- EP-A1- 3 477 099
- ES-U- 1 241 584
- US-A1- 2022 049 520

## Beschreibung

Die Erfindung betrifft ein Übergangssegment nach dem Oberbegriff des Anspruchs 1.

Aus der Praxis sind solche Übergangssegmente bekannt. Sie werden bei Windkraftanlagen verwendet, um die Montage eines Stahlsegments zu ermöglichen, welches den Betonturm nach oben verlängert und seinerseits das Maschinenhaus trägt. Der Betonturm selbst besteht aus einer Mehrzahl von übereinander angeordneten, liegend ausgerichteten Ringen, die mithilfe von Spannlitzen miteinander verbunden und auf Druck belastet werden. Zur sicheren Verankerung des Stahlsegments an dem Betonturm sind bei den bekannten Übergangssegmenten ein oder mehrere Anker in den Betonwerkstoff des Übergangssegments einbetoniert, wobei diese Anker den Anschluss von Befestigungselementen ermöglichen, beispielsweise in Art von Spannschrauben, die dazu dienen, das Stahlsegment mit dem Übergangssegment zu verschrauben.

In seinem obersten Abschnitt, nämlich in dem Übergangssegment, ist der Betonturm erheblichen Belastungen ausgesetzt, und da er mit zunehmender Höhe einen immer geringeren Durchmesser aufweist, weist zur Aufnahme dieser Belastungen das Übergangssegment häufig die größte Wandstärke auf, die insgesamt in dem Betonturm vorkommt. Hinzu kommt, dass aufgrund der einbetonierten Anker das Übergangssegment durch Zugkräfte belastet wird, wobei Betonwerkstoffen durch Drucckräfte erheblich höher belastet werden können als durch Zugkräfte. Aus diesem Grund werden die Übergangssegmente mit einem außergewöhnlich hohen Anteil an Bewehrungsmaterial verstärkt, in Bezug auf das jeweilige Volumen, welches die verschiedenen Bauteile des Betonturms einnehmen, mit dem höchsten Anteil an Bewehrungsmaterial im gesamten Betonturm.

Dies wiederum führt dazu, dass in der Schalung, in welcher das Übergangssegment gegossen werden soll, ein engmaschiger Korb aus Bewehrungsmaterial angeordnet wird, bevor der Betonwerkstoff in die Schalung gegossen wird. Angesichts der Höhe des Übergangssegments und dementsprechend der Schalung, sowie angesichts des engmaschigen Korbs aus Bewehrungsmaterial kann es bei der Herstellung des Übergangsegments schwierig sein, eine Entmischung des Betonwerkstoffs zu verhindern sowie die Einhaltung der gewünschten Qualitätsmaßstäbe zu überwachen und sicherzustellen, dass sich der fließfähige Betonwerkstoff in der Schalung gleichmäßig verteilt und keine ungefüllten Hohlräume in der Schalung verbleiben, die das Übergangssegment unzulässig schwächen würden.

Aufgrund der großen Wandstärke und des hohen Anteils an Bewehrungsmaterial weist das Übergangssegment ein hohes Gewicht auf. Hinzu kommen Abmessungen, die in vielen Fällen die Grenzen für einen problemlosen, genehmigungsfreien Straßentransport überschreiten, so dass das Übergangssegment nur mit einem entsprechend großen Aufwand zur Baustelle der Windkraftanlage verbracht werden kann, was nämlich das Einholen der entsprechenden Genehmigungen und die Durchführung des Sondertransports betrifft. Dieser Aufwand beeinflusst die Kosten des Übergangssegments nachteilig. Das Dokument ES1241584U offenbart ein Übergangssegment, das die Merkmale des Übergangssegments vom Anspruch 1 aufweist.

Der Erfindung liegt die Aufgabe zugrunde, ein Übergangssegment eines Windkraft-Turmbauwerks zu schaffen, welches eine verbesserte Wirtschaftlichkeit unter wenigstens Beibehaltung oder sogar Steigerung der technischen Qualität des Übergangsegments aufweist.

Diese Aufgabe wird durch ein Übergangssegment nach Anspruch 1 gelöst. Merkmale der Erfindung werden nachfolgend erörtert, wobei vorteilhafte Ausgestaltungen der Erfindung unter anderem in den Unteransprüchen beschrieben werden. Diese Gestaltungsmerkmale können im Zusammenhang mit der Erfindung verwirklicht werden oder auch unabhängig von der Erfindung eigenständig erfinderisch sein, und sie können entweder einzeln und unabhängig voneinander oder auch in einer beliebigen Kombination verwirklicht werden, einschließlich der Verwirklichung sämtlicher genannter Merkmale, sofern eine Kombination nicht ausdrücklich oder technisch zwingend ausgeschlossen ist.

Die Erfindung schlägt mit anderen Worten vor, das Übergangssegment nicht monolithisch, sondern vielmehr in überraschender Weise mehrteilig auszugestalten, trotz der hohen auf das Übergangssegment einwirkenden Belastungen. Dabei wird das Übergangssegment aus übereinander angeordneten Ringen zusammengesetzt, die jeweils aus einem Betonwerkstoff bestehen. Diese Ringe werden in der Art zusammengespannt, dass sie werkstoffgerecht auf Druck beansprucht werden, wie dies für Betonwerkstoffe vorteilhaft ist. Hierzu ist unterhalb des untersten Rings ein unterer Fußring vorgesehen, und oberhalb des obersten Rings ist ein Kopfring vorgesehen, wobei sowohl der Fußring als auch der Kopfring jeweils aus Stahl bestehen und die Fuß- und Kopfringe miteinander verspannt sind, so dass sie Drucckräfte auf die dazwischen angeordneten Betonringe ausüben.

Im Ergebnis wird so ein Übergangssegment geschaffen, welches wie ein einteiliges, monolithisches Übergangssegment gehandhabt werden kann. Die Montage des Übergangssegments muss nicht im Betonfertigteilwerk, sondern kann vielmehr an der Baustelle erfolgen. Für die Verspannung können als Spannmittel beispielsweise Spannschrauben mit Ankerstäben oder dergleichen vorgesehen sein. Für die Verspannung kann beispielsweise vorgesehen sein, dass das den Betonturm verlängernde Stahlsegment mit dem Übergangssegment verbunden wird, bevor das Übergangssegment auf die Turmspitze gehoben wird. Jedoch insbesondere bei großen Turmhöhen in Verbindung mit großen Hubgewichten wird das Übergangssegment bevorzugt zunächst auf der Baustelle montiert und anschließend auf die Turmspitze gehoben, wobei in diesem Fall das Stahlsegment durch einen separaten Hub auf Höhe des Übergangssegment gehoben und dann mit diesem verbunden wird.

Durch die baustellenseitige Montage können die einzelnen Bestandteile des Übergangssegments problemlos, ohne einen Sondertransport zu erfordern, über öffentliche Straßen zur Baustelle verbracht werden. Dort werden dann die aus Beton bestehenden Ringe zusammen mit den Stahlringen zu dem Übergangssegment zusammengesetzt, welches anschließend wie die übrigen Betonsegmente des Betonturms mittels des an der Baustelle vorhandenen Krans genauso wie ein monolithisches Übergangssegment angehoben und als oberer Abschluss des Betonturms montiert werden kann.

Vorteilhaft kann an den Fußring der Anker anschließen oder der Fußring selbst kann den Anker bilden, an den das Stahlsegment angeschlossen wird, beispielsweise mittels Ankerstange, so dass - im Gegensatz zu einem in den Betonring eingegossenen Anker - durch die Spannkräfte, die beim Anschluss des Stahlsegments an das Übergangssegment auftreten, die Betonringe des Übergangssegments auf Druck belastet werden, den sie aufgrund ihrer Werkstoffeigenschaften problemlos aufnehmen können.

An den Kopfring können die Spannlitzen anschließen, so dass der Kopfring durch deren Spannkräfte nach unten belastet wird und dadurch die Betonringe des Übergangssegments ebenfalls werkstoffgerecht auf Druck belastet und zusammengepresst werden.

Der Aufbau des Übergangssegments aus mehreren Betonringen kann in der Art ausgestaltet sein, dass ein unterer Ring sowie ein oberer Ring sich jeweils an ihrem äußeren Umfang konisch nach oben hin verjüngen, entsprechend dem grundsätzlichen Aufbau, dass sich der Betonturm von unten nach oben hin verjüngt. Dabei kann vorteilhaft vorgesehen sein, zwischen den unteren und oberen, jeweils konischen Ringen einen zylindrischen Ring anzuordnen, also einen Ring, dessen äußere Mantelfläche zylindrisch verläuft. Auf diese Weise wird ein modularer Aufbau des Übergangssegments in der Art ermöglicht, dass dessen Höhe variiert werden kann, indem zylindrische Ringe unterschiedlicher Anzahl und / oder unterschiedlicher Höhe zwischen den beiden konischen Ringen angeordnet werden. Auch tragen die zylindrischen Elemente dazu bei, eine möglichst hohe Steifigkeit zu erzielen, falls entsprechend höhere Anforderungen an die Statik des Übergangssegments gestellt werden. Die Wirtschaftlichkeit bei der Herstellung des Übergangssegments wird dadurch verbessert, da für die Herstellung unterschiedlich hoher Übergangssegmente nicht jeweils eigene Schalungen und Bewehrungskörbe bereitgestellt zu werden brauchen.

In einer Ausgestaltung kann vorgesehen sein, dass sich nur ein Ring, und zwar entweder ein oberer, ein unterer oder der Zwischenring am äußeren Umfang konisch nach oben hin verjüngt. Insbesondere der oberste Ring kann eine Fase aufweisen, welche den Außendurchmesser des obersten Rings auf den Außendurchmesser des Kopfrings verjüngt. Ebenso können sämtliche Ringe zwischen dem Kopf- und dem Fußring im Wesentlichen zylindrisch ausgestaltet sein.

Die einzelnen aus Beton bestehenden Ringe des Übergangsegments können jeweils aus mehreren Teilstücken zusammengesetzt sein, die jeweils lediglich einen Umfangsabschnitt des gesamten Rings bilden. Beispielsweise können die einzelnen Teilstücke jeweils einen Halbkreis bilden. Durch die Aufteilung eines Rings in Teilstücke wird die Handhabung im Herstellungswerk sowie der Transport der einzelnen Bestandteile des Übergangsegments vereinfacht und damit wirtschaftlich vorteilhaft beeinflusst.

Die Stahlbauteile des Fuß- und / oder Kopfrings können im Wesentlichen einteilig ausgestaltet sein. In einer Weiterentwicklung können diese jedoch umfangsmäßig mehrere Ringabschnitte mit Trennstellen aufweisen, so dass jeweils mehrere Ringabschnitte einen Fußring und / oder einen Kopfring bilden. Es kann beispielsweise vorgesehen sein, dass zwei Ringabschnitte des Kopfrings jeweils einen Halbkreis bilden und der Fußring dagegen mehr als zwei Ringabschnitte aufweist, oder umgekehrt. Ebenso können der Fußring und der Kopfring jeweils dieselbe Ringabschnittanzahl aufweisen. Auch durch die Aufteilung des Fuß- und / oder Kopfrings kann die Handhabung im Herstellungswerk sowie der Transport vereinfacht und damit wirtschaftlich vorteilhaft beeinflusst werden. Darüberhinausgehend lassen erste Kalkulationen erkennen, dass bei der Herstellung mehrteiliger Fuß- und / oder der Kopfringe vergleichsweise wenig Materialverschnitt anfällt, sodass die Materialkosten minimiert werden können.

Die Teilstücke der Ringe können die Schaffung eines stabilen Verbunds ermöglichen, wenn die einzelnen Ringe in der Art übereinander montiert werden, dass die Trennstellen zwischen den Teilstücken ein und desselben Rings von einem zum nächsten Ring jeweils versetzt zueinander verlaufen. Weiterhin können bevorzugt die Trennstellen zwischen den Ringabschnitten des Fuß- und / oder des Kopfrings einerseits und andererseits die Trennstellen zwischen den Teilstücken eines oder mehrerer Ringe umfangsmäßig versetzt zueinander verlaufen, unterstützend einen stabilen Verbund. Vor allem vor dem Hintergrund, dass die Kopf- und Fußringe bevorzugt auch versetzt sind, ist dies vorteilhaft, da keine durchgehende vertikale Verbindung der Ringteile notwendig ist.

Die Teilstücke eines Rings können an den Oberflächen, die für einen Kontakt mit benachbarten Elementen bestimmt sind, in einer als vorteilhaft erachteten Ausgestaltung des Übergangssegments eine besonders glatte Oberfläche aufweisen, um beispielsweise einen möglichst fugenlosen Anschluss benachbarter Teilstücke eines Rings aneinander zu gewährleisten. Insbesondere gilt dies jedoch für die oberen und unteren Flächen eines Rings bzw. eines Teilstücks: durch eine möglichst glatte Ausgestaltung dieser beiden Oberflächen ist auch bei hohen Druckkräften, die auf den Ring bzw. das betreffende Teilstück einwirken, die Vermeidung von unzulässig hohen Druckspitzen gewährleistet, die ansonsten das betreffende Bauteil des Übergangssegments oder das daran anschließende, benachbarte Bauteil zerstören könnten, wenn die großen Kräfte als Druckkräfte auf das Übergangssegment einwirken, die durch die Verankerung des Stahlsegments oder durch die Spannung der Spannlitzen in das Übergangssegment eingeleitet werden. Beispielsweise kann vorgesehen sein, dass die Ober- und Unterseiten der Ringe geschliffen werden, bevor die Ringe zu dem Übergangssegment zusammengesetzt werden.

In einer besonders erfinderischen Ausgestaltung kann vorgesehen sein, dass ein oder mehrere Spannmittel den Fußring mit dem Kopfring verspannen, wobei ein erstes Spannmittel radial innen von einem zweiten, radial äußeren Spannmittel angeordnet ist. Auf diese Weise kann eine besonders wirksame Verspannung geschaffen werden.

Vorteilhaft können die Ringe in aufrechter Richtung verlaufende Kanäle aufweisen, wobei die Kanäle übereinander angeordneter Ringe miteinander in der Art fluchten, dass sie Spannkanäle schaffen, welche beispielsweise zur Aufnahme der zur Verspannung des Betonturms bestimmten Spannlitzen dienen können. Weiterhin können Ausnehmungen in dem Fußring und / oder in dem Kopfring vorgesehen sein, welche mit Spannkanälen fluchtend angeordnet sind. Spannmittel, wie beispielsweise Ankerstäbe, Spannschrauben oder Ähnliche können somit vom Fußring zum Kopfring - oder umgekehrt - durch die Ringe geführt werden. Um die Spannmittel in den Spannkanälen vor Korrosion oder dergleichen schützen zu können, können Injektionskanäle vorgesehen sein, in der Art, dass Korrosionsschutzmittel in die Spannkanäle einführbar sind.

Die Erfindung betrifft ferner ein Windkraft-Turmbauwerk nach Anspruch 12, nachfolgend kurz als Turmbauwerk bezeichnet, und zwar in Art einer hybriden Konstruktion. Vorschlagsgemäß bilden im Wesentlichen ein Betonturm und ein oder mehrere Stahlsegmente das Turmbauwerk, wobei die Stahlsegmente den Betonturm nach oben verlängern. Das obere Ringsegment des Betonturms ist als ein der vorherigen Beschreibung entsprechendes Übergangssegment ausgestaltet zur Aufnahme der hohen Belastungen in diesem Belastungsbereich des Turmbauwerks.

Besonders bevorzugt ist unterhalb des Übergangssegments ein Ringsegment angeordnet, welches eine vorzugsweise aus Stahl bestehende Lagerplatte aufweist. Die Lagerplatte liegt der Oberkante dieses Ringsegments auf und ist mit diesem kraftübertragungswirksam verbunden. Auf der Lagerplatte steht das Übergangssegment mit dem Fußring. Insbesondere nach dem Spannen der Spannlitzen kann durch diese Lagerung des Übergangssegments eine vergleichsweise torsionssteife Verbindung zwischen Ringsegment und Übergangssegment geschaffen werden.

Für eine Weiterentwicklung kann vorgesehen sein, dass das Stahlsegment einen unteren T-Flansch aufweist, mit welchem das Stahlsegment auf dem Kopfring steht, so dass das Stahlsegment einen unteren, ersten Flanschabschnitt und einen unteren, zweiten Flanschabschnitt aufweist, wobei der erste Flanschabschnitt nach radial innen und der zweite nach radial außen ausgerichtet ist. Vorteilhaft können einerseits erste, radial innere Spannmittel vorgesehen sein, die zur Verspannung an den ersten, inneren Flanschabschnitt angeschlossen sind, und andererseits zweite, radial äußere Spannmittel, die zur Verspannung an den zweiten, äußeren Flanschabschnitt angeschlossen sind. Ein T-flanschartiger Anschluss kann zu einer verbesserten Verspannung beitragen, unter anderem in dem eine vergleichsweise große Auflagefläche bereitgestellt wird, welche insbesondere reibungsbedingt die Torsionssteifigkeit des Bauwerks erhöhen kann.

In einer besonders erfinderischen Ausgestaltung kann vorgesehen sein, dass ein oder mehrere Spannmittel den Fußring mit dem Kopfring verspannen, wobei ein erstes Spannmittel radial innen von einem zweiten, radial äußeren Spannmittel angeordnet ist. Auf diese Weise kann eine besonders wirksame Verspannung geschaffen werden.

Ausführungsbeispiele der Erfindung werden anhand der rein schematischen Darstellungen nachfolgend näher erläutert, wobei einzelne Merkmale oder eine Kombination von Merkmalen der dargestellten Ausführungsbeispiele auch unabhängig von der übrigen Ausgestaltung des jeweiligen Ausführungsbeispiels verwirklicht sein können. Dabei zeigt
- Fig. 1: eine ausschnittsweise Seitenansicht auf ein Turmbauwerk einer Windkraftanlage,
- Fig. 2: ein Übergangssegment sowie ein daran anschließendes Stahlsegment aus dem Turmbauwerk von Fig. 1,
- Fig. 3: eine Draufsicht auf die Bauteile von Fig. 2,
- Fig. 4: einen vertikalen Schnitt durch die Bauteile von Fig. 2, und
- Fig. 5: in größerem Maßstab als Fig. 4 ein erstes Ausführungsbeispiel der Befestigung von Spannschrauben an einem Fußring,
- Fig. 6: ein zweites Ausführungsbeispiel der Befestigung von Spannschrauben an einem Fußring,
- Fig. 7: eine perspektivische Ansicht von oben auf das Übergangssegment von Fig. 2,
- Fig. 8: eine perspektivische Ansicht von unten auf das Übergangssegment von Fig. 2,
- Fig. 9: eine weitere ausschnittsweise Seitenansicht auf ein Turmbauwerk einer Windkraftanlage,
- Fig. 10: eine perspektivische Ansicht von unten auf das Übergangssegment von Fig. 9, und
- Fig. 11: einen vertikalen Schnitt durch Bauteile von Fig. 9 mit vergrößerten Detaildarstellungen.

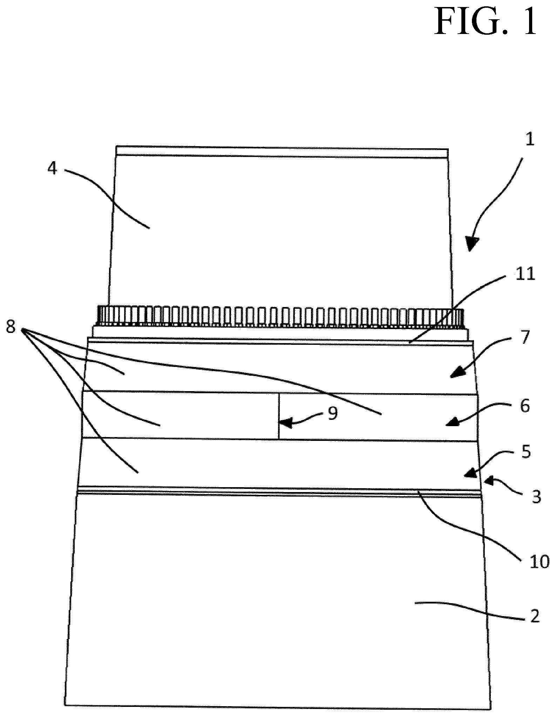

In Fig. 1 ist ausschnittsweise ein Turmbauwerk 1 einer Windkraftanlage dargestellt, wobei das Turmbauwerk 1 einen aus mehreren Segmenten 2 bestehenden Betonturm aufweist, der nach oben durch ein Übergangssegment 3 abgeschlossen wird, an welches nach oben hin ein Stahlsegment 4 anschließt, welches das Maschinenhaus der Windkraftanlage trägt. Abweichend von dem dargestellten Ausführungsbeispiel können nach oben auch weitere Stahlsegmente anschließen, um eine größere Turmhöhe zu erreichen.

Bei dem dargestellten Ausführungsbeispiel besteht das Übergangssegment 3 aus drei separaten Ringen, die als unterster Ring 5, als Zwischenring 6 und als oberster Ring 7 bezeichnet sind. An ihren jeweiligen Ober- und Unterseiten sind die Ringe plangeschliffen, so dass sie fugenlos aneinander anschließen und lokale Druckspitzen vermieden werden. Jeder der drei Ringe besteht seinerseits aus mehreren Teilstücken 8, so dass sich innerhalb eines Rings Trennstellen 9 ergeben, wobei die Teilstücke 8 benachbarter Ringe so versetzt zueinander angeordnet sind, dass in Fig. 1 nur die Trennstelle 9 zwischen den beiden Teilstücken 8 des Zwischenrings 6 zu sehen ist. Unterhalb des untersten Rings 5 bildet ein Fußring 10 den unteren Abschluss des Übergangssegments 3, und oberhalb des obersten Rings 7 bildet ein Kopfring 11 den oberen Abschluss des Übergangssegments 3.

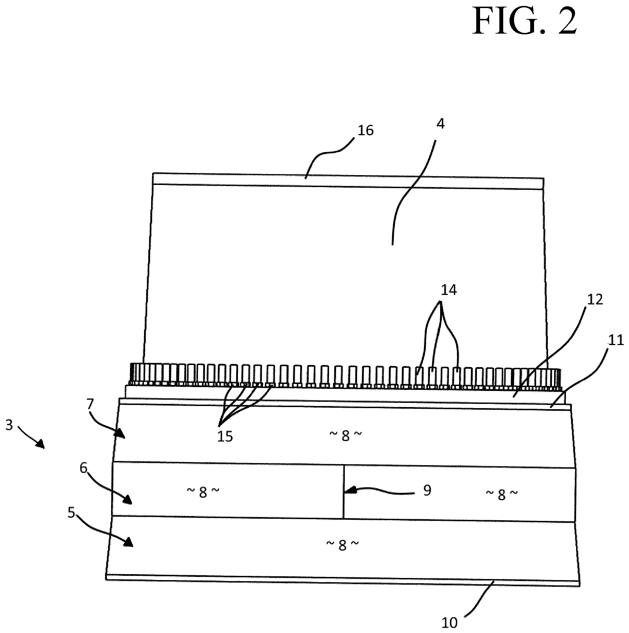

In Fig. 2 sind das Übergangssegment 3 und das Stahlsegment 4 dargestellt. Das Stahlsegment 4 weist an seinem unteren Ende einen umlaufenden Außenflansch 12 auf, mit dem das Stahlsegment 4 auf dem Kopfring 11 des Übergangssegment 3 steht. Abweichend von dem dargestellten Ausführungsbeispiel kann das Stahlsegment 4 an seinem unteren Ende einen radial nach innen gerichteten Flansch aufweisen. Als Spannschrauben 14 sind Gewindestangen bezeichnet, die sich über den Außenflansch 12 hinaus nach oben erstrecken, und nach unten erstrecken sie sich bis zum Fußring 10 des Übergangssegments 3. Mittels jeweils einer Mutter 15 pressen die Spannschrauben 14 den Außenflansch 12 an das Übergangssegment 3, so dass der Fußring 10 als Widerlager oder Anker für die Befestigung des Stahlsegments 4 an dem Übergangssegment 3 dient. Am oberen Ende des Stahlsegments 4 verläuft ein Innenflansch 16, der im Unterschied zu dem Außenflansch 12 nicht radial nach außen, sondern radial nach innen ragt.

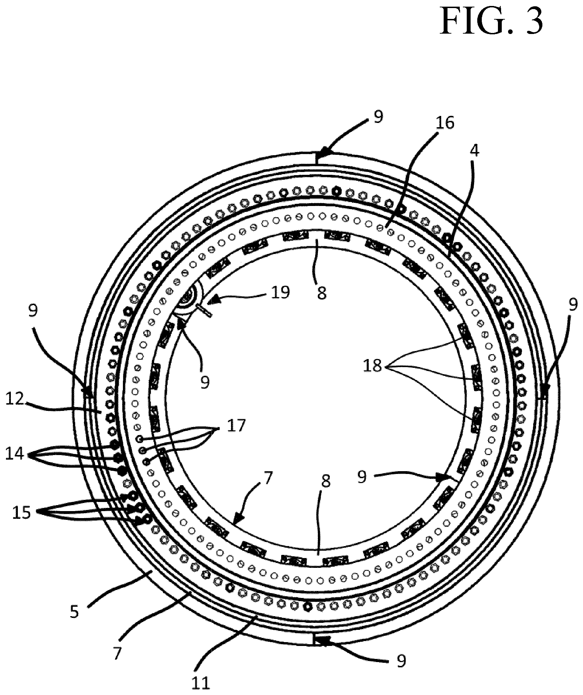

Fig. 3 zeigt die Baugruppe von Fig. 2 in einer Draufsicht. Dabei ist ersichtlich, dass der Innenflansch 16 mit einer Vielzahl von Bohrungen 17 versehen ist, die zur Montage einer in den Zeichnungen nicht dargestellten Kopfeinheit der Windkraftanlage dienen. Weiterhin sind radial innerhalb des Innenflansches 16 die beiden Teilstücke 8 und deren Trennstellen 9 des obersten Rings 7 erkennbar, und radial außerhalb des Außenflansches 12 sind die Trennstellen 9 der obersten und untersten Ringe 7 und 5 erkennbar. Fig. 3 zeigt weiterhin die oberen Enden von Spannlitzen 18, die sich im Inneren des Turms bis nach unten erstrecken, um die Segmente 2 des Turmbauwerks 1 zu verspannen. Bei dem dargestellten Ausführungsbeispiel erstrecken sich die Spannlitzen 18 durch eine Spannpresse hindurch, die während der Errichtung des Turmbauwerks einmalig aufgesetzt wird, um die Spannlitzen 18 mit der gewünschten Vorspannung zu versehen. Die Spannlitzen 18 sind in der Spannpresse mit an sich bekannten Befestigungsmitteln 19 gehalten, die in Fig. 3 lediglich für eine einzige der dargestellten Spannlitzen 18 angedeutet sind.

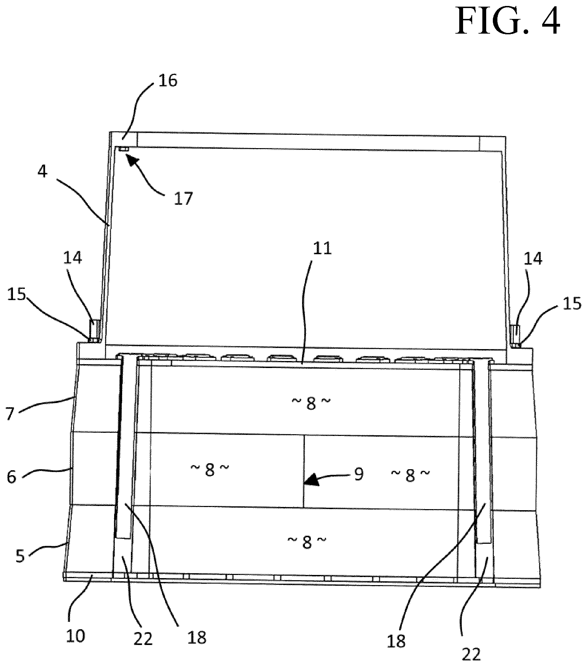

Fig. 4 zeigt die Baugruppe der Fig. 2 und 3 in einem Vertikalschnitt, wobei die Spannlitzen 18 jeweils in einem Spannkanal 22 verlaufen und nur abschnittsweise dargestellt sind. Es ist ersichtlich, dass die Spannlitzen 18 mit ihren erweiterten oberen Enden auf dem Kopfring 11 des Übergangsegments 3 aufliegen, so dass die nach unten gerichteten Spannkräfte durch die Spannlitzen 18 als Druckkräfte auf das Übergangssegment 3 wirken. Die Spannschrauben 14 erstrecken sich durch die untersten, Zwischen- und obersten Ringe 5, 6 und 7 und sind an dem Fußring 10 gehalten, wie nachfolgend näher erläutert wird:

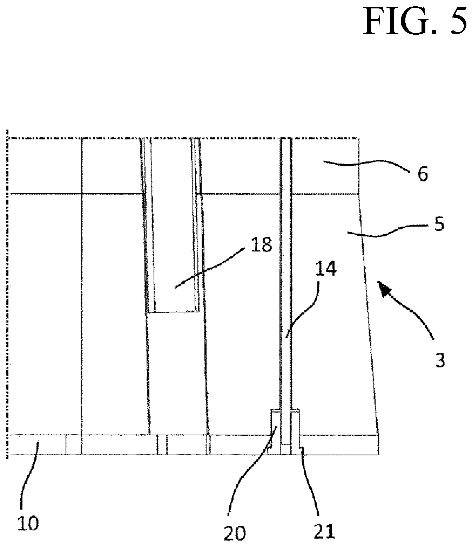

Fig. 5 zeigt in einem größeren Maßstab als Fig. 4 und mittels eines Vertikalschnitts durch das Übergangssegment 3, wie die Spannschrauben 14 an den Fußring 10 anschließen. Die als Gewindestangen ausgestalteten Spannschrauben 14 sind mit ihren unteren Enden in Gewindehülsen 20 eingeschraubt, die ihrerseits an ihrem unteren Ende jeweils einen umlaufenden, nach außen ragenden Kragen 21 aufweisen und auf diese Weise formschlüssig in dem Fußring 10 gegen nach oben wirkende Kräfte gesichert sind. Die Spannkräfte, die mittels der Spannschrauben 14 zwischen dem Fußring 10 und dem Kopfring 11 und dem darauf verlaufenden Außenflansch 12 wirken, belasten das Übergangssegment 3 und dessen Betonringe als Druckkräfte.

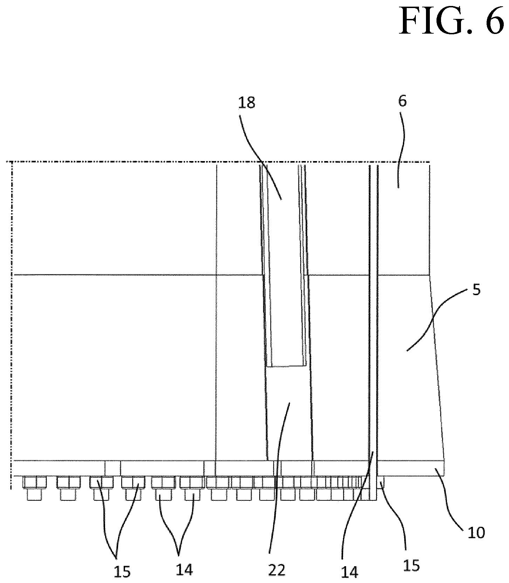

Fig. 6 zeigt, wie abweichend von dem Ausführungsbeispiel der Fig. 5 die Spannschrauben 14 an den Fußring 10 anschließen können, nämlich genauso, wie sie an den Kopfring 11 anschließen. Dabei werden die durchgesteckten Gewindestangen, welche die Spannschrauben 14 bilden, ebenfalls mit Muttern 15 gesichert. Unterhalb des Fußrings 10 tauchen die nach unten überstehenden Spannschrauben 14 und die Muttern 15 in das darunter liegende Betonelement ein. Die Ausgestaltung nach Fig. 6

hat gegenüber der von Fig. 5 wirtschaftliche Vorteile, da mit den Gewindestangen 14 und den Muttern 15 Normteile verwendet werden können und die Kopf- und Fußplatten 10 und 11 lediglich mit Durchgangsbohrungen versehen werden müssen. Sonderteile wie die Gewindehülsen 20 sind ebenso wenig erforderlich wie aufwendige Bearbeitungen der Kopf- und Fußplatten 10 und 11, um die Einsenkungen für die Kragen 21 der Gewindehülsen 20 zu schaffen.

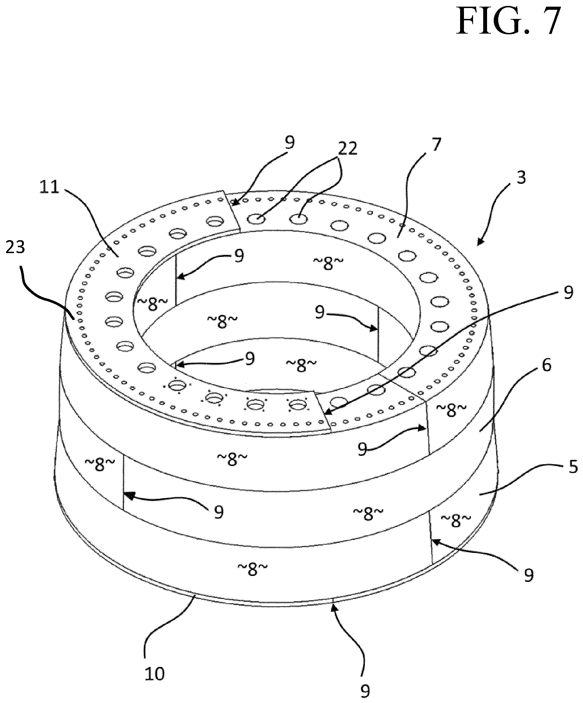

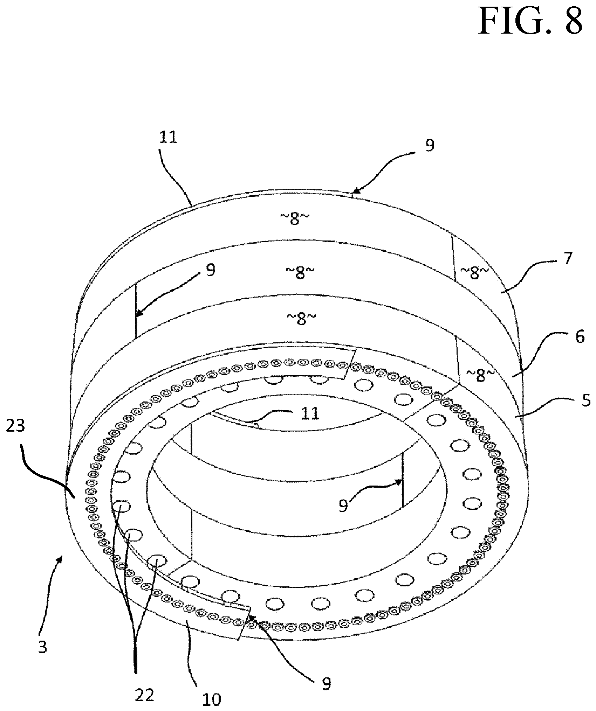

Die Fig. 7 und 8 zeigen jeweils in einer perspektivischen Ansicht von oben (Fig. 7) und von unten (Fig. 8) auf das Übergangssegment 3, dass auch die Kopf- und Fußringe 10, 11 aus Ringabschnitten 23 bestehen und jeweils Trennstellen 9 aufweisen, wobei jeweils eines der Ringabschnitte der Kopf- und Fußringe 10, 11 noch nicht montiert ist.

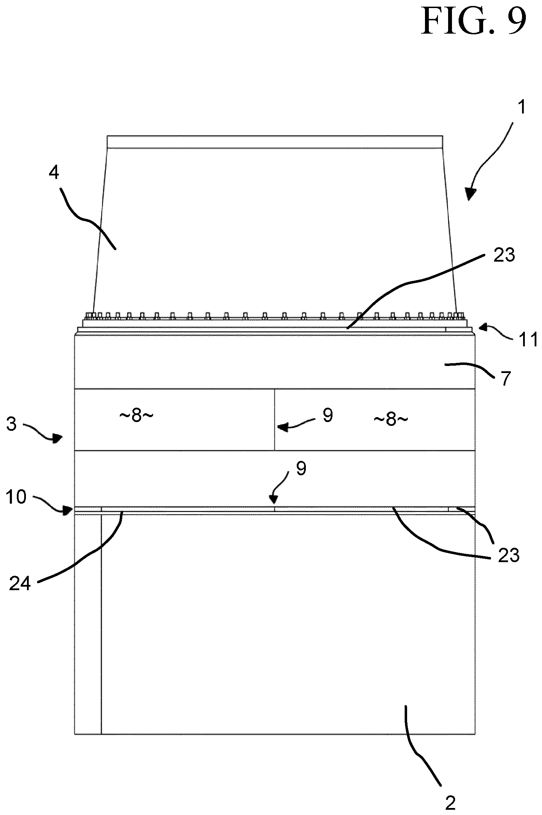

Eine weitere ausschnittsweise Seitenansicht auf ein Turmbauwerk 1 einer Windkraftanlage zeigt Fig. 9. Das dargestellte Übergangssegment 3 weist drei Ringe auf, die zwischen dem Fußring 10 und dem Kopfring 11 angeordnet sind und nunmehr jeweils im Wesentlichen zylindrisch ausgestaltet sind, das heißt mit zylindrisch verlaufender Mantelfläche. Der oberste Ring 7 weist eine Fase auf, welche den Außendurchmesser des Rings verjüngt bis auf den Außendurchmesser des Kopfrings 11. Die Teilstücke 8 der Ringe sowie die Ringabschnitte 23 des Fuß- und Kopfrings 10, 11 sind im Verband zueinander angeordnet, so dass die Trennstellen 9 jeweils versetzt zueinander verlaufen. Weiterhin ist eine Lagerplatte 24 auf der Oberkante des Segments 2 unterhalb des Übergangssegments 3 zu sehen, auf welcher der Fußring 10 des Übergangssegments 3 lagert.

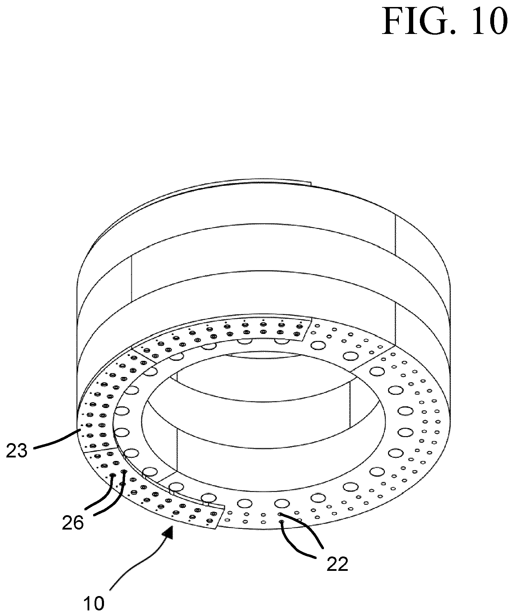

Die in Fig. 10 dargestellte Ansicht von unten auf das Übergangssegment 3 von Fig. 9 zeigt, dass der Fußring 10 aus sechs Ringabschnitten 23 besteht, wobei drei Ringabschnitte 23 noch nicht montiert sind. Die Ringabschnitte 23 des Fußrings 10 weisen Ausnehmungen 26 auf, welche mit in den Ringen angeordneten Spannkanälen 22 fluchten.

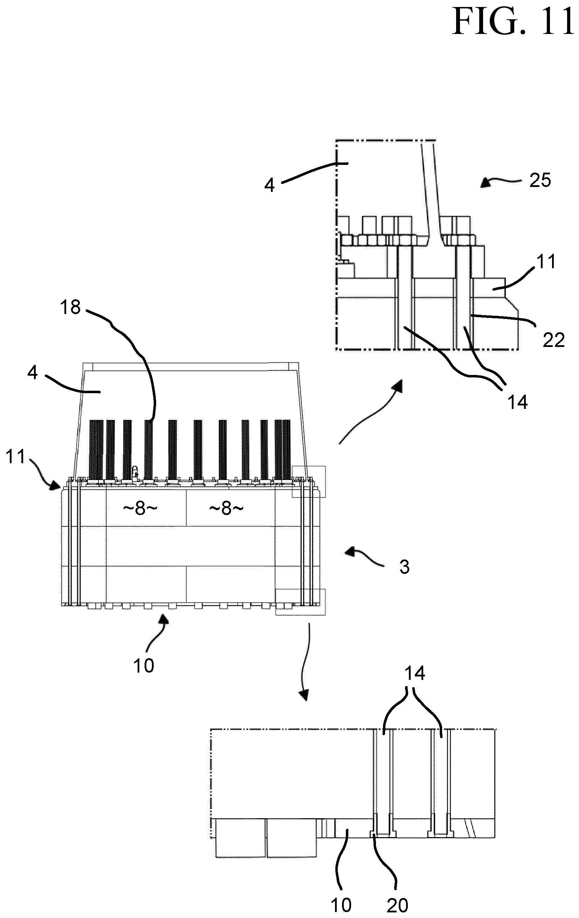

Fig. 11 zeigt einen Vertikalschnitt durch das aus Fig. 9 bekannte Übergangssegment 3 mit verspanntem Stahlsegment 4, wobei das dargestellte Ausführungsbeispiel der Verspannung an dem Fußring 10 und an dem Kopfring 11 anhand vergrößerter Detaildarstellungen visualisiert wird. Spannlitzen 18 erstrecken sich in Spannkanälen 22, welche aus Darstellungsgründen nicht zu sehen sind, durch die aus mehreren Teilstücken 8 zusammengesetzten Ringe des Übergangssegments 3. Das Stahlsegment 4 umgibt einen Innenraum, in welchem die Spannlitzen 18 gespannt werden können. An der Unterseite weist das Stahlsegment 4 einen unteren, umlaufenden T-Flansch 25 auf, in der Art, dass der T-Flansch 25 abschnittsweise sowohl nach radial innen als auch nach radial außen ausgerichtet ist.

Spannschrauben 14 erstrecken sich in Spannkanälen 22 von dem T-Flansch 25 des Stahlsegments 4 durch den Kopfring 11 und durch die Ringe bis zum Fußring 10, in welchem die als Gewindestangen ausgestalteten Spannschrauben 14, wie bereits zu Fig. 5 beschrieben, in Gewindehülsen 20 eingeschraubt sind. Insbesondere eine Gesamtbetrachtung der Fig. 10 und 11 veranschaulicht, dass mehrere Spannschrauben 14 radial innen und mehrere Spannschrauben 14 radial außen angeordnet sind, so dass zur Verspannung die radial innen angeordneten Spannschrauben 14 in den inneren Flanschabschnitt des T-Flansches 25 eingreifen und die radial äußeren Spannschrauben 14 in den radial äußeren Flanschabschnitt.

### Bezugszeichen:

- 1: Turmbauwerk
- 2: Segment
- 3: Übergangssegment
- 4: Stahlsegment
- 5: Unterster Ring
- 6: Zwischenring
- 7: Oberster Ring
- 8: Teilstück
- 9: Trennstelle
- 10: Fußring
- 11: Kopfring
- 12: Außenflansch
- 14: Spannschraube
- 15: Mutter
- 16: Innenflansch
- 17: Bohrung
- 18: Spannlitze
- 19: Befestigungsmittel
- 20: Gewindehülse
- 21: Kragen
- 22: Spannkanal
- 23: Ringabschnitt
- 24: Lagerplatte
- 25: T-Flansch
- 26: Ausnehmung

## Patentansprüche

1. Übergangssegment (3) eines Windkraft-Turmbauwerks (1), das dazu bestimmt ist, als oberes Abschlusselement zwischen Segmenten (2) eines Betonturms und einem den Betonturm nach oben verlängernden Stahlsegment (4) angeordnet zu werden,
wobei das Übergangselement (3) Anker aufweist, die zum Anschluss an Befestigungselemente des Stahlsegments (4) bestimmt sind,
**dadurch gekennzeichnet,**
**dass** das Übergangssegment (3) mehrere horizontale, übereinander angeordnete, jeweils aus einem Betonwerkstoff bestehende Ringe aufweist,
wobei unter einem untersten Ring (5) ein Fußring (10) aus Stahl verläuft,
und oberhalb eines obersten Rings (7) ein Kopfring (11) aus Stahl verläuft,
und wobei die Fuß- und Kopfringe (10, 11) miteinander in der Art verspannt sind, dass das Übergangssegment (3) als eine einzige, zusammenhängende Baugruppe handhabbar ist.

2. Übergangssegment (3) nach Anspruch 1,
**dadurch gekennzeichnet,**
**dass** ein unterer Ring und ein oberer Ring sich an ihrem jeweiligen äußeren Umfang konisch aufwärts verjüngen.

3. Übergangssegment (3) nach Anspruch 2,
**dadurch gekennzeichnet,**
**dass** zwischen dem unteren Ring und dem oberen Ring ein Zwischenring (6) angeordnet ist, dessen äußere Umfangsfläche zylindrisch verläuft.

4. Übergangssegment (3) nach einem der vorhergehenden Ansprüche,
**dadurch gekennzeichnet,**
**dass** ein Ring des Übergangssegments (3) umfangsmäßig mehrere Teilstücke (8) aufweist, die jeweils einen Umfangsabschnitt des Rings bilden.

5. Übergangssegment (3) nach Anspruch 4,
**dadurch gekennzeichnet,**
**dass** die Teilstücke (8) zweier benachbart übereinander angeordneter Ringe in Umfangsrichtung derart versetzt zueinander ausgerichtet sind, dass ein Verbund geschaffen wird und Trennstellen (9) zwischen den jeweiligen Teilstücken (8) umfangsmäßig versetzt zueinander verlaufen.

6. Übergangssegment (3) nach einem der vorhergehenden Ansprüche,
**dadurch gekennzeichnet,**
**dass** der Fuß- und / oder der Kopfring (10, 11) umfangsmäßig mehrere Ringabschnitte (23) aufweist.

7. Übergangssegment (3) nach Anspruch 4 oder 5 und Anspruch 6,
**dadurch gekennzeichnet,**
**dass** die Ringabschnitte (23) in Umfangsrichtung derart versetzt zu einem benachbart angeordneten Ring angeordnet sind, dass ein Verbund geschaffen wird und Trennstellen (9) zwischen den Ringabschnitten (23) und Trennstellen (9) zwischen den Teilstücken (8) des Rings umfangsmäßig versetzt zueinander verlaufen.

8. Übergangssegment (3) nach einem der vorhergehenden Ansprüche,
**dadurch gekennzeichnet,**
**dass** die Fuß- und Kopfringe (10, 11) miteinander mittels mehrerer Spannschrauben (14) verspannt sind, die oberhalb des Kopfrings (11) und unterhalb des Fußrings (10) mit Muttern (15) gesichert sind.

9. Übergangssegment (3) nach einem der vorhergehenden Ansprüche,
**dadurch gekennzeichnet,**
**dass** die Fuß- und Kopfringe (10, 11) miteinander mittels mehrerer Spannmittel verspannt sind, wobei ein erstes Spannmittel radial innen von einem zweiten, radial äußeren Spannmittel angeordnet ist.

10. Übergangssegment (3) nach einem der vorhergehenden Ansprüche,
**dadurch gekennzeichnet,**
**dass** die Ringe in aufrechter Richtung verlaufende Kanäle aufweisen, wobei die Kanäle übereinander angeordneter Ringe miteinander in der Art fluchten, dass sie miteinander verbundene Spannkanäle (22) schaffen.

11. Übergangssegment (3) nach Anspruch 10,
**dadurch gekennzeichnet,**
**dass** der Fuß- und / oder der Kopfring (10, 11) Ausnehmungen aufweisen, welche mit den Spannkanälen (22) fluchten.

12. Windkraft-Turmbauwerk (1),
mit einem aus mehreren übereinander gesetzten Segmenten (2) aufgebauter Betonturm,
mit einem den Betonturm nach oben verlängerndem Stahlsegment (4),
und mit einem Übergangssegment (3) als oberes Abschlusselement zwischen dem Betonturm und dem Stahlsegment (4),
**dadurch gekennzeichnet,**
**dass** das Übergangssegment (3) nach einem der vorhergehenden Ansprüche ausgestaltet ist.

13. Windkraft-Turmbauwerk (1) nach Anspruch 12,
**dadurch gekennzeichnet,**
**dass** das Segment (2) unterhalb des Übergangssegments (3) auf der Oberkante eine Lagerplatte (24) aufweist, auf welcher der Fußring (10) gelagert ist.

14. Windkraft-Turmbauwerks (1) nach Anspruch 12 oder 13, **dadurch gekennzeichnet,**
**dass** ein umlaufender T-Flansch (25) des Stahlsegments (4) auf dem Kopfring (11) steht, in der Art, dass ein erster Flanschabschnitt nach radial innen ausgerichtet ist und ein zweiter Flanschabschnitt nach radial außen.

## Claims

1. Transition segment (3) of a wind turbine tower structure (1), which is intended to be arranged as an upper terminating element between segments (2) of a concrete tower and a steel segment (4) extending the concrete tower upwards,
wherein the transition element (3) has anchors, which are intended for connection to fastening elements of the steel segment (4),
**characterized**
**in that** the transition segment (3) has a plurality of horizontal rings, which are arranged one above the other and each consist of a concrete material,
wherein a foot ring (10) made of steel runs beneath a lowermost ring (5),
and a head ring (11) made of steel runs above an uppermost ring (7),
and wherein the foot and head rings (10, 11) are clamped together in such a manner that the transition segment (3) can be handled as a single, cohesive assembly.

2. Transition segment (3) according to Claim 1,
**characterized**
**in that** a lower ring and an upper ring taper conically upwards at their respective outer circumference.

3. Transition segment (3) according to Claim 2, **characterized**
**in that** an intermediate ring (6), the outer circumferential surface of which runs cylindrically, is arranged between the lower ring and the upper ring.

4. Transition segment (3) according to one of the preceding claims,
**characterized**
**in that** one ring of the transition segment (3) circumferentially has a plurality of sections (8), each forming a circumferential portion of the ring.

5. Transition segment (3) according to Claim 4,
**characterized**
**in that** the sections (8) of two rings arranged adjacently one above the other are oriented so as to be offset relative to one another in the circumferential direction in such a manner that an assembly is created and separation points (9) between the respective sections (8) run so as to be circumferentially offset relative to one another.

6. Transition segment (3) according to one of the preceding claims,
**characterized**
**in that** the foot and/or head ring (10, 11) circumferentially have/has a plurality of ring portions (23).

7. Transition segment (3) according to Claim 4 or 5 and Claim 6,
**characterized**
**in that** the ring sections (23) are arranged so as to be offset relative to an adjacently arranged ring in the circumferential direction in such a manner that an assembly is created and separation points (9) between the ring portions (23) and separation points (9) between the sections (8) of the ring run so as to be circumferentially offset relative to one another.

8. Transition segment (3) according to one of the preceding claims,
**characterized**
**in that** the foot and head rings (10, 11) are clamped together using a plurality of clamping screws (14), which are secured above the head ring (11) and beneath the foot ring (10) using nuts (15).

9. Transition segment (3) according to one of the preceding claims,
**characterized**
**in that** the foot and head rings (10, 11) are clamped together using a plurality of clamping devices, wherein a first clamping device is arranged radially inside a second, radially outer clamping device.

10. Transition segment (3) according to one of the preceding claims,
**characterized**
**in that** the rings have channels running in an upright direction, wherein the channels of rings arranged one above the other are aligned with one another in such a manner that they create clamping channels (22) that are connected to one another.

11. Transition segment (3) according to Claim 10,
**characterized**
**in that** the foot and/or head ring (10, 11) have/has cutouts, which are aligned with the clamping channels (22).

12. Wind turbine tower structure (1),
having a concrete tower constructed from a plurality of segments (2) placed one above the another,
having a steel segment (4) extending the concrete tower upwards,
and having a transition segment (3) as an upper terminating element between the concrete tower and the steel segment (4),
**characterized**
**in that** the transition segment (3) is configured according to one of the preceding claims.

13. Wind turbine tower structure (1) according to Claim 12,
**characterized**
**in that** the upper edge of the segment (2) beneath the transition segment (3) has a mounting plate (24) on which the foot ring (10) is mounted.

14. Wind turbine tower structure (1) according to claim 12 or 13,
**characterized**
**in that** an encircling T flange (25) of the steel segment (4) is positioned on the head ring (11) in such a manner that a first flange portion is oriented radially inwards and a second flange portion is oriented radially outwards.

## Revendications

1. Segment de transition (3) d'une structure de mât (1) d'éolienne, qui se destine à être disposé en tant qu'élément terminal supérieur entre des segments (2) d'un mât en béton et un segment en acier (4) prolongeant vers le haut le mât en béton,
l'élément de transition (3) comportant des ancrages qui se destinent à être raccordés à des éléments de fixation du segment en acier (4),
**caractérisé en ce**
**que** le segment de transition (3) comporte plusieurs anneaux horizontaux disposés les uns au-dessus des autres, constitués chacun d'un matériau en béton,
un anneau de base (10) en acier s'étendant sous un anneau le plus bas (5),
et un anneau de partie supérieure (11) en acier s'étendant au-dessus d'un anneau le plus haut (7),
et les anneaux de base et de partie supérieure (10, 11) étant serrés l'un à l'autre de telle manière que le segment de transition (3) peut être manipulé comme un unique ensemble cohérent.

2. Segment de transition (3) selon la revendication 1, **caractérisé en ce**
**qu'**un anneau inférieur et un anneau supérieur se rétrécissent vers le haut de manière conique sur leur périphérie extérieure respective.

3. Segment de transition (3) selon la revendication 2, **caractérisé en ce**
**qu'**est disposé entre l'anneau inférieur et l'anneau supérieur un anneau intermédiaire (6), dont la surface périphérique extérieure s'étend de manière cylindrique.

4. Segment de transition (3) selon l'une des revendications précédentes,
**caractérisé en ce**
**qu'**un anneau du segment de transition (3) comporte en périphérie plusieurs pièces partielles (8) qui forment chacune une section périphérique de l'anneau.

5. Segment de transition (3) selon la revendication 4, **caractérisé en ce**
**que** les pièces partielles (8) de deux anneaux disposés l'un au-dessus de l'autre de manière adjacente sont orientées de manière décalée l'une par rapport à l'autre dans la direction périphérique de telle manière qu'un assemblage est créé et que des emplacements de séparation (9) entre les pièces partielles (8) respectives s'étendent de manière décalée les uns par rapport aux autres en périphérie.

6. Segment de transition (3) selon l'une des revendications précédentes,
**caractérisé en ce**
**que** l'anneau de base et/ou l'anneau de partie supérieure (10, 11) comportent en périphérie plusieurs sections annulaires (23).

7. Segment de transition (3) selon la revendication 4 ou 5 et la revendication 6,
**caractérisé en ce**
**que** les sections annulaires (23) sont disposées de manière décalée par rapport à un anneau disposé de manière adjacente dans la direction périphérique de telle manière qu'un assemblage est créé et que des emplacements de séparation (9) entre les sections annulaires (23) et des emplacements de séparation (9) entre les pièces partielles (8) de l'anneau s'étendent de manière décalée les uns par rapport aux autres en périphérie.

8. Segment de transition (3) selon l'une des revendications précédentes,
**caractérisé en ce**
**que** les anneaux de base et de partie supérieure (10, 11) sont serrés l'un à l'autre au moyen de plusieurs vis de serrage (14), qui sont bloquées avec des écrous (15) au-dessus de l'anneau de partie supérieure (11) et en dessous de l'anneau de base (10).

9. Segment de transition (3) selon l'une des revendications précédentes,
**caractérisé en ce**
**que** les anneaux de base et de partie supérieure (10, 11) sont serrés l'un à l'autre au moyen de plusieurs moyens de serrage, un premier moyen de serrage étant disposé à l'intérieur radialement depuis un deuxième moyen de serrage radialement extérieur.

10. Segment de transition (3) selon l'une des revendications précédentes,
**caractérisé en ce**
**que** les anneaux comportent des canaux s'étendant dans une direction verticale, les canaux d'anneaux disposés les uns au-dessus des autres s'alignant entre eux de telle manière qu'ils créent des canaux de serrage (22) reliés les uns aux autres.

11. Segment de transition (3) selon la revendication 10, **caractérisé en ce**
**que** l'anneau de base et/ou l'anneau de partie supérieure (10, 11) comportent des évidements qui sont alignés avec les canaux de serrage (22).

12. Structure de mât (1) d'éolienne,
avec un ou plusieurs segments (2) placés les uns au-dessus des autres d'un mât en béton monté,
avec un segment en acier (4) prolongeant vers le haut le mât en béton,
et avec un segment de transition (3) en tant qu'élément terminal supérieur entre le mât en béton et le segment en acier (4),
**caractérisée en ce**
**que** le segment de transition (3) est configuré selon l'une des revendications précédentes.

13. Structure de mât (1) d'éolienne selon la revendication 12,
**caractérisée en ce**
**que** le segment (2) comporte, sous le segment de transition (3), sur le bord supérieur, une plaque d'appui (24), sur laquelle l'anneau de base (10) est monté.

14. Structure de mât (1) d'éolienne selon la revendication 12 ou 13,
**caractérisée en ce**
**qu'**une bride en T (25) périphérique du segment en acier (4) se trouve sur l'anneau de partie supérieure (11) de telle manière qu'une première section de bride est orientée vers l'intérieur radialement et une deuxième section de bride est orientée vers l'extérieur radialement.
